(19) **Europäisches Patentamt / European Patent Office / Office européen des brevets**

(11) **EP 4 741 883 A1**

(12) **EUROPEAN PATENT APPLICATION**
published in accordance with Art. 153(4) EPC

(43) Date of publication:
**13.05.2026 Bulletin 2026/20**

(21) Application number: **24850717.0**

(22) Date of filing: **02.07.2024**

(51) International Patent Classification (IPC):
**G01S 19/41** (2010.01) **G01S 19/45** (2010.01)
**A01D 34/00** (2006.01)

(52) Cooperative Patent Classification (CPC):
**A01D 34/00; G01S 19/41; G01S 19/45**

(86) International application number:
**PCT/CN2024/103137**

(87) International publication number:
**WO 2025/031066 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.08.2023 CN 202310992635**
**08.08.2023 CN 202311648939**

(71) Applicant: **Ecovacs Home Service Robotics Co., Ltd.**
**Suzhou, Jiangsu 215124 (CN)**

(72) Inventors:
• **ZHANG, Taojing**
**Suzhou, Jiangsu 215124 (CN)**
• **JIANG, Daihong**
**Suzhou, Jiangsu 215124 (CN)**
• **FU, Lei**
**Suzhou, Jiangsu 215124 (CN)**
• **WANG, Wen**
**Suzhou, Jiangsu 215124 (CN)**
• **RU, Yichao**
**Suzhou, Jiangsu 215124 (CN)**

(74) Representative: **Hannke Bittner & Partner mbB**
**Regensburg**
**Prüfeninger Straße 1**
**93049 Regensburg (DE)**

(54) **BASE STATION POSITION CHANGE DETECTION METHOD, DEVICE, AND READABLE STORAGE MEDIUM**

(57) Embodiments of the present application disclose a base station position change detection method, a device, and a readable storage medium. A self-moving device travels a certain distance when switching from a non-working state to a working state, and in the traveling process, a visual image and RTK positioning are obtained, and the self-moving device is repositioned on the basis of the visual image and the RTK positioning. When the repositioning is successful, it is determined that the base station is not moved. By means of this solution, by combining the visual image and motion characteristics of the self-moving device, the self-moving device can determine whether the base station is moved or not, and there is no need to install an additional sensor, avoiding positioning anomalies of the self-moving device due to the base station being moved, achieving the objective of improving the positioning accuracy of the self-moving device.

201 — When a self-mobile device switches from a non-working state to a working state, control the self-mobile device to travel

202 — Control the self-mobile device to acquire visual images and real-time kinematic (RTK) positioning during the travel of the self-mobile device

203 — Perform, according to the visual images and the RTK positioning, repositioning of the self-mobile device

204 — When the repositioning of the self-mobile device is successful, determining that a reference station has not been moved

FIG. 2

## Description

### TECHNICAL FIELD

Embodiments of the present application relate to the technical field of lawn mowers, and in particular, to a detection method for reference station position changes, a device, and a readable storage medium.

### BACKGROUND

Real-time kinematic (RTK) positioning technology is a high-precision positioning method on the basis of the global navigation satellite system (GNSS). Visual simultaneous localization and mapping (SLAM) technology is a method for autonomous robot positioning and environmental map construction on the basis of visual sensors.

In the field of robotics, RTK technology is often combined with visual SLAM technology for robot positioning, thereby fully utilizing the advantages of both. However, once a reference station is moved, the robot's positioning becomes abnormal. Therefore, it is necessary to ensure that the reference station is not moved. In common manners, a gyroscope, an accelerometer, or the like is mounted on the reference station. If the sensors detect significant movement of the reference station, it is considered to have been moved.

However, the detection method above requires additional sensors to be mounted on the reference station, resulting in high costs.

### SUMMARY

Embodiments of the present application provide a detection method for reference station position changes, a device, and a readable storage medium. By combining visual images with motion characteristics of a self-mobile device, the self-mobile device can determine whether the reference station has been moved without mounting additional sensors, thereby enhancing the positioning accuracy of the self-mobile device.

In a first aspect, the embodiments of the present application provide a detection method for reference station position changes, the method being applied to the self-mobile device and comprising:

when a self-mobile device switches from a non-working state to a working state, controlling the self-mobile device to travel;

controlling the self-mobile device to acquire visual images and real-time kinematic (RTK) positioning during a travel of the self-mobile device;

performing, according to the visual images and the RTK positioning, repositioning of the self-mobile device; and

when the repositioning of the self-mobile device is successful, determining that the reference station has not been moved, the reference station being configured to provide differential signals to the self-mobile device such that the self-mobile device acquires RTK positioning according to the differential signals.

In a second aspect, the embodiments of the present application provide a detection apparatus for reference station position changes, the apparatus being integrated on a self-mobile device and comprising:

a traveling module, configured to, when a self-mobile device switches from a non-working state to a working state, control the self-mobile device to travel;

an acquisition module, configured to control the self-mobile device to acquire visual images and real-time kinematic (RTK) positioning during a travel of the self-mobile device;

a processing module, configured to perform, according to the visual images and the RTK positioning, repositioning of the self-mobile device; and

a determination module, configured to, when the repositioning of the self-mobile device is successful, determine that a reference station has not been moved, the reference station being configured to provide differential signals to the self-mobile device such that the self-mobile device acquires RTK positioning according to the differential signals.

In a third aspect, the embodiments of the present application provide a self-mobile device comprising a processor, a memory, and a computer program stored on the memory and executable on the processor, wherein the processor, when executing the computer program, causes the electronic device to implement the method according to the first aspect or any possible implementation of the first aspect.

In a fourth aspect, the embodiments of the present application provide a computer-readable storage medium having computer instructions stored thereon, wherein the computer instructions, when executed by a processor, are configured to implement the method according to the first aspect or any possible implementation of the first aspect.

In a fifth aspect, the embodiments of the present application provide a computer program product comprising a computer program, wherein the computer program, when executed by a processor, is configured to implement the method according to the first aspect or any possible implementation of the first aspect.

The embodiments of the present application provide a detection method for reference station position changes, a device, and a readable storage medium. When the self-mobile device switches from a non-working state to a working state and moves a distance, visual images and RTK positioning are acquired during the travel, and repositioning of the self-mobile device is performed according to the visual images and RTK positioning. When repositioning is successful, it is determined that the reference station has not been moved. With this solution, the self-mobile device determines whether the reference station has been moved by combining visual images with motion characteristics of the self-mobile device without mounting additional sensors, thereby avoiding positioning abnormalities of the self-mobile device caused by movement of the reference station and achieving enhanced positioning accuracy of the self-mobile device.

## BRIEF DESCRIPTION OF THE DRAWINGS

To more clearly illustrate technical solutions of embodiments of the present application, the drawings required for describing the embodiments are briefly introduced below. It is apparent that the drawings described below merely illustrate some embodiments of the present application, and that other drawings may also be obtained according to these drawings by a person of ordinary skill in the art without creative efforts.

FIG. 1 is a schematic diagram of an implementation environment of a detection method for reference station position changes according to an embodiment of the present application;

FIG. 2 is a flowchart of a detection method for reference station position changes according to an embodiment of the present application;

FIG. 3 is a flowchart of repositioning in a detection method for reference station position changes according to an embodiment of the present application;

FIG. 4 is a schematic diagram of an environmental map in a detection method for reference station position changes according to an embodiment of the present application;

FIG. 5 is a flowchart of projecting feature points in an environmental map onto current visual images during first repositioning in a detection method for reference station position changes according to an embodiment of the present application;

FIG. 6 is another flowchart of a detection method for reference station position changes according to an embodiment of the present application;

FIG. 7 is a schematic diagram of a detection apparatus for reference station position changes according to an embodiment of the present application; and

FIG. 8 is a schematic structural diagram of a self-mobile device according to an embodiment of the present application.

## DETAILED DESCRIPTION

In the field of robotics, positioning technology is especially important, as accurate positioning can greatly ensure that a self-mobile device completes tasks and maintains safety. Common positioning technologies comprise VSLAM positioning, RTK positioning, VSLAM positioning integrated with RTK positioning, and the like. These positioning methods are introduced below.

1. VSLAM positioning technology

VSLAM technology is a method for autonomous robot positioning and environmental map construction on the basis of visual sensors. The objective of VSLAM technology is to simultaneously estimate the robot's position and construct a map of the environment in an unknown space through the robot's own movements and observations. VSLAM technology primarily uses a camera as a sensor and achieves positioning and mapping by processing a sequence of images captured by the camera. VSLAM technology comprises the following steps:

(1) Feature extraction and matching.

The robot extracts distinctive feature points from images captured by the camera, and then matches the feature points between consecutive images to calculate the relative motion between adjacent frames.

(2) Motion estimation.

After obtaining correspondences of feature points between adjacent images through feature point matching, the robot calculates the relative motion between the adjacent images according to these correspondences. This process is called motion estimation. Common methods comprise visual odometry (VO), optical flow, and the like.

(3) Pose optimization.

Since errors may occur during the motion estimation process, it is necessary to optimize the entire trajectory of the robot to reduce cumulative errors. Common optimization methods comprise nonlinear optimization, graph optimization, and the like.

(4) Map construction.

During the robot's movement, the observed feature points are projected into the global world coordinate system according to the results of motion estimation, forming a three-dimensional feature point map, i.e., an environmental map.

(5) Loop closure detection.

When the robot returns to a previously traversed area, a loop closure detection module identifies the repetition and incorporates the loop closure information into pose optimization to eliminate cumulative errors. The previously traversed areas by the robot include, but are not limited to, the area where the base station is located and areas outside the base station.

(6) Repositioning.

Similar to loop closure detection, during the robot's path planning and movement according to the environmental map, if positioning is lost, the robot quickly recovers its pose by re-matching the current visual data with the data from the environmental map. Causes of positioning loss in the robot comprise the robot being physically moved during operation, or the robot being relocated while powered off and then restarted at a different location. Common visual repositioning methods comprise a bag-of-words (BOW) model and the like.

BOW is a repositioning method on the basis of the bag-of-words model. A visual vocabulary is first constructed using training data, and feature points are mapped to the corresponding visual words. During the repositioning process, the robot determines the similarity between a current frame and key frames in the environmental map, and obtains a repositioning result according to a key frame with a highest similarity. The current frame refers to an image frame captured at the robot's current position after positioning loss.

In the process of determining similarity, the robot determines a sparse vector of the current frame and sparse vectors of the key frames. For clarity, the sparse vector of the current frame is hereinafter referred to as a first vector, and the sparse vectors of the key frames are hereinafter referred to as second vectors. The robot determines the similarity between the first vector and each of the second vectors, thereby obtaining the similarity between the current frame and the key frames.

The BOW method exhibits strong repositioning performance, particularly excelling in large-scale environments.

2. RTK positioning.

RTK positioning is a high-precision positioning method on the basis of GNSS. RTK positioning technology achieves centimeter-level positioning accuracy by utilizing carrier phase observations from satellite signals, typically with errors of less than 2 centimeters (cm). Therefore, RTK positioning technology is widely used in fields of surveying, unmanned aerial vehicles, autonomous driving, and the like.

RTK positioning has certain limitations. For example, it requires the establishment of a fixed reference station and communication equipment to transmit the error information calculated by the reference station to the robot to achieve centimeter-level positioning accuracy. This positioning is relative to the reference station. If the reference station is moved, the robot's output positioning correspondingly shifts, leading to positioning errors.

In addition, the positioning accuracy of RTK positioning is also influenced by factors of multipath effects, occlusions, signal interference, and the like.

3. VSLAM positioning fused with RTK.

RTK provides high positioning accuracy but is easily affected by obstructions such as buildings and trees. The VSLAM positioning technology provides slightly lower positioning accuracy but is not affected by occlusions in the surrounding environment. By combining RTK positioning with VSLAM positioning, the strengths of both methods are fully leveraged, thereby enhancing the accuracy and reliability of positioning and mapping.

In one combined solution, RTK data serves as a high-precision global positioning reference, while the VSLAM technology provides relative motion information, thus mitigating temporary RTK positioning signal outages and the instability of the VSLAM technology in feature-sparse environments. By utilizing RTK data and the relative motion information from VSLAM, the camera's position, i.e., the robot's position and pose, is estimated using solutions of Kalman filtering, nonlinear optimization, and the like.

In RTK positioning, if the reference station is moved, it results in positioning errors in the robot. Therefore, when the robot uses the RTK positioning technology, it is necessary to ensure that the reference station is not moved. Common determination methods comprise the following:

a. Monitoring whether coordinates of the reference station have changed.

The coordinates of the reference station itself are monitored over an extended period of time. For example, on the basis of single-point positioning of the reference station, the position coordinates of the reference station are monitored. If the position coordinates of the reference station show a significant change, the reference station is considered to have been moved. The disadvantage of this solution is that the movement of the reference station can only be detected when there is a significant change in its position coordinates. That is, the reference station can only be detected as having moved when the displacement of the reference station exceeds a threshold distance. If the displacement of the reference station is relatively small, such as 1 m, 2 m, or the like, the movement of the reference station may not be detected.

b. Detecting the motion status of the reference station using a gyroscope or accelerometer.

In this solution, a gyroscope or accelerometer is mounted on the reference station to detect the motion status of the reference station using the gyroscope or accelerometer. If significant movement of the reference station is detected, the reference station is considered to have been moved. The disadvantage of this solution is that it requires the mounting of additional sensors, and it can only detect when the reference station tilts or moves significantly. If the reference station undergoes only a slight translation, the movement of the reference station may not be detected.

c. Detecting the motion status of the reference station using a geomagnetic sensor.

In this solution, a geomagnetic sensor is mounted on the reference station to detect changes in the geomagnetic field. When the reference station is moved, the magnetic field around the reference station may change. If the geomagnetic sensor detects a change in the magnetic field around the reference station, it is considered that the reference station has been moved. The disadvantage of this solution is that it requires the mounting of additional sensors on the reference station, and it can only detect changes when the angle of the reference station changes.

d. Determine whether the position of the reference station has changed by combining the position of the base station of the robot.

In this solution, when the robot enters the base station, the deviation between the current position and the position of the base station is determined. When the deviation is significant, the system prompts the user to confirm whether the position of the base station has changed or the position of the reference station has changed. The disadvantage of this solution is that the robot needs to be located at the position of the base station. Even so, if the RTK signal at the base station location is weak, it remains impossible to determine. Furthermore, after the user moves the base station, for example, if the robot is a lawn mower, and the user has a plurality of lawns, the user may relocate the base station from one lawn to another to enable the robot to mow the lawns automatically. In this case, when the robot determines that the deviation between the current position and the position of the base station is significant, human intervention is required to determine, indicating that the system lacks sufficient intelligence.

On the basis of this, the embodiments of the present application provide a detection method for reference station position changes, a device, and a readable storage medium. By combining visual images with motion characteristics of a self-mobile device, the self-mobile device can determine whether the reference station has been moved without mounting additional sensors, thereby enhancing the positioning accuracy of the self-mobile device.

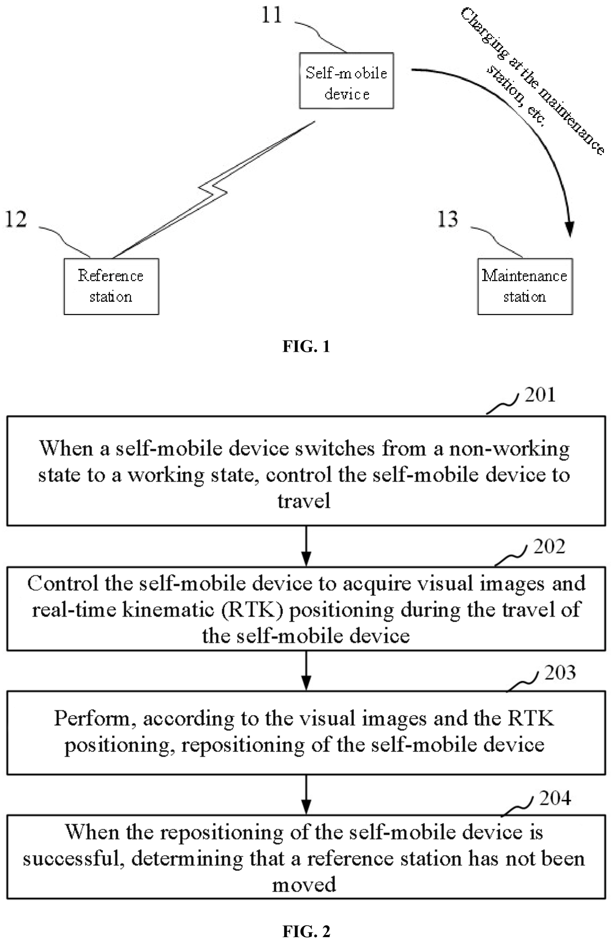

FIG. 1 is a schematic diagram of an implementation environment of a detection method for reference station position changes according to an embodiment of the present application. Referring to FIG. 1, the implementation environment comprises a self-mobile device 11, a reference station 12, and a maintenance station 13. A network connection is established between the self-mobile device 11 and the reference station 12, and the reference station 12 is configured to provide differential signals to the self-mobile device 11. During the travel of the self-mobile device 11, positioning information is obtained using the positioning module, and the positioning information is corrected using the differential signals to achieve RTK positioning.

The self-mobile device 11, also referred to as a mobile station, robot, autonomous mobile device, etc., is a device capable of autonomously traveling within a working area and performing tasks on the basis of an environmental map. It includes, but is not limited to, lawn mowers, outdoor navigation robots, automatic spraying devices, and the like.

The reference station 12, also known as the RTK reference station, is configured to provide differential signals to the self-mobile device 11. In outdoor robot applications, the movement of the reference station 12 may lead to abnormal RTK positioning of the self-mobile device 11. When positioning abnormalities occur, it is necessary to recalibrate the position of the reference station 12 or rebuild the map.

The maintenance station 13, also known as the base station, pedestal, charging dock, etc., is typically provided at a fixed position. The self-mobile device 11 performs maintenance tasks such as charging and cleaning at the maintenance station 13.

FIG. 2 is a flowchart of a detection method for reference station position changes according to an embodiment of the present application. The executing entity of this embodiment is the self-mobile device. This embodiment comprises:

At 201, when the self-mobile device switches from a non-working state to a working state, the self-mobile device is controlled to travel.

Under normal circumstances, the self-mobile device may be paused, in sleep mode, or powered off for an extended period, during which the likelihood of the reference station being moved is higher. Furthermore, when the self-mobile device is paused, it is easier to determine whether the reference station has been moved. Therefore, in the embodiments of the present application, before the self-mobile device switches from a non-working state to a working state, it first determines whether the reference station has been moved.

In one approach, once the self-mobile device switches from a non-working state to a working state, it triggers repositioning. During the repositioning process, the self-mobile device travels forward while collecting visual images and RTK positioning data during the travel. Repositioning is performed on the basis of the visual images and RTK positioning.

In another approach, after the self-mobile device switches from a non-working state to a working state, repositioning is triggered only when preset conditions are met. One such preset condition, for example, may be a change in the surrounding environment of the self-mobile device. That is, after the self-mobile device switches from a non-working state to a working state, it first compares the environmental images before and after the state switch to determine whether the surrounding environment has changed. Repositioning is triggered only if there is a change in the surrounding environment.

The change in the surrounding environment of the self-mobile device may be due to the following reasons: Reason 1: The self-mobile device has moved during the non-working state. Movement comprises cases where the self-mobile device has not moved but its orientation has changed, where it has moved but its orientation has not changed, where both the device has moved and its orientation has changed, and the like. For example, the user moves the self-mobile device from location A to location B, and the environmental features of A and B are different. For another example, if the orientation of the self-mobile device changes, the environmental images captured by visual sensors, such as cameras, differ according to different orientations.

Reason 2: The self-mobile device has not moved during the non-working state, but the surrounding environment has changed. For example, when the self-mobile device enters the non-working state, there are dynamic obstacles in the surrounding environment. When the self-mobile device switches from the non-working state to the working state, the dynamic obstacles have already moved away. For another example, if the orientation of the self-mobile device changes, the environmental images captured by visual sensors, such as cameras, differ according to different orientations.

At 202, the self-mobile device is controlled to acquire visual images and real-time kinematic (RTK) positioning during the travel of the self-mobile device.

In the embodiments of the present application, the self-mobile device is provided with visual sensors, a positioning module, an RTK sensor, and the like. The RTK sensor is configured to receive differential signals from the reference station. During the movement of the self-mobile device, it continuously uses the visual sensors to capture visual images. For example, the self-mobile device captures visual images at a rate of 10 frames per second.

Moreover, the self-mobile device uses the RTK sensor to receive differential signals from the reference station and corrects the positioning information determined by the positioning module using the differential signals, thereby obtaining RTK positioning. For example, the self-mobile device receives differential signals at a rate of 10 times per second, generating 10 RTK positioning per second. Each RTK positioning corresponds to a visual image.

At 203, repositioning of the self-mobile device is performed according to the visual images and the RTK positioning.

After the self-mobile device obtains a frame of visual image and the corresponding RTK positioning, repositioning of the self-mobile device is performed according to the visual image and the RTK positioning.

At 204, when the repositioning of the self-mobile device is successful, it is determined that the reference station has not been moved.

After each repositioning, if the repositioning is successful, the self-mobile device determines that the reference station has not been moved. Thereafter, the self-mobile device performs tasks according to the environmental map and the like.

If the repositioning fails, the self-mobile device executes further logic to determine whether the reference station has been moved and the like. Alternatively, if the self-mobile device fails to perform repositioning according to the visual image and RTK positioning, it is assumed that the reference station has been moved.

The embodiments of the present application provide a detection method for reference station position changes. When the self-mobile device switches from a non-working state to a working state and moves a distance, visual images and RTK positioning are acquired during the travel, and repositioning of the self-mobile device is performed according to the visual images and RTK positioning. When repositioning is successful, it is determined that the reference station has not been moved. With this solution, the self-mobile device determines whether the reference station has been moved by combining visual images with motion characteristics of the self-mobile device without mounting additional sensors, thereby avoiding positioning abnormalities of the self-mobile device caused by movement of the reference station and achieving enhanced positioning accuracy of the self-mobile device.

Optionally, in the embodiments above, the non-working state comprises any one of the following states: a pause state, a sleep state, or a power-off state.

In the embodiments of the present application, the focus is on determining whether the reference station has been moved when the self-mobile device switches from a non-working state to a working state. For example, the self-mobile device may automatically enter a pause state due to low battery, sensor malfunction, rain, or the like. After a period of time, when the self-mobile device switches back to a working state after charging, sensor recovery, or the rain stops, the self-mobile device needs to determine whether the reference station has been moved.

For another example, the self-mobile device enters a sleep state at the maintenance station after completing a task. After a period of time, the self-mobile device enters the working state again upon recognizing a work command. The work command may be issued by the user pressing a physical button, through an application (APP), via voice commands, etc., which is not limited in the embodiments of the present application.

For another example, the user controls the self-mobile device to enter a pause state through a physical button, an APP, or the like. After a period of time, the self-mobile device re-enters the working state. In this case, the self-mobile device needs to determine whether the reference station has been moved.

For another example, the user turns off the self-mobile device through a physical button, an APP, or the like. After a period of time, the self-mobile device is powered on again. In this case, the self-mobile device needs to determine whether the reference station has been moved.

The reason for determining whether the reference station has been moved after the self-mobile device switches from a non-working state to a working state is that the self-mobile device may remain in a non-working state for an extended period, i.e., in a pause state, sleep state, or power-off state. During this time, the likelihood of the reference station being moved is higher.

Additionally, when the self-mobile device is in a working state, it performs positioning or mapping using a combination of RTK positioning technology and VSLAM positioning technology. If the reference station is moved, it may cause abnormal RTK data, which in turn leads to positioning abnormalities. If the reference station is moved during the environmental map creation process, it may result in the creation of an abnormal environmental map. Once the environmental map is abnormal, the positioning of the self-mobile device is inevitably abnormal.

With this solution, whenever the self-mobile device switches from a pause state, sleep state, or power-off state to a working state, it determines whether the reference station has been moved. This avoids positioning abnormalities caused by the movement of the reference station during the non-working state, thereby enhancing the positioning accuracy of the self-mobile device upon re-entering the working state.

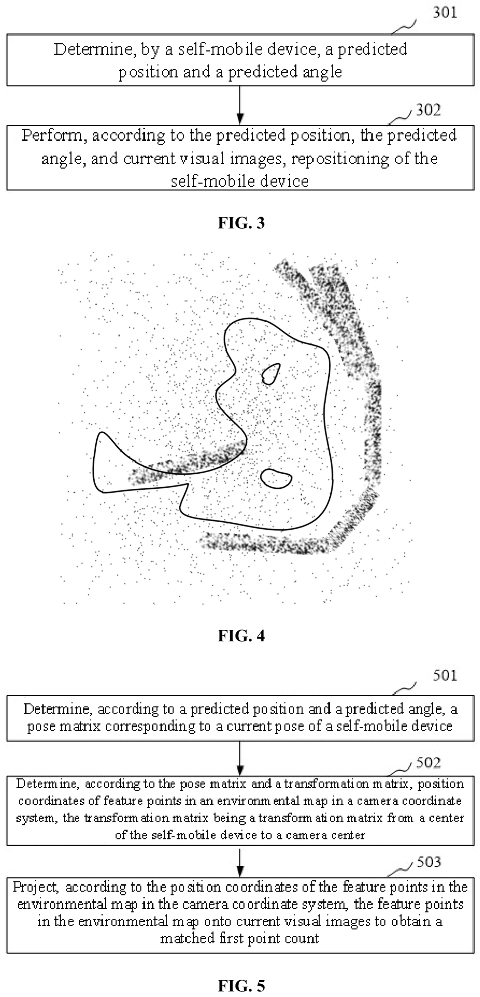

FIG. 3 is a flowchart of repositioning in a detection method for reference station position changes according to an embodiment of the present application. This embodiment comprises:

At 301, the self-mobile device determines the predicted position and predicted angle.

When the self-mobile device performs repositioning according to visual images and RTK positioning, each time it acquires a visual image and RTK positioning, it determines a predicted position and a predicted angle according to the visual image and RTK positioning. The predicted angle and predicted position are configured to perform the repositioning.

When determining the predicted position, the self-mobile device takes the current RTK positioning as the predicted position after obtaining the current RTK positioning.

When determining the predicted angle, the self-mobile device calculates the predicted angle of the self-mobile device according to the current RTK positioning and the previous positioning. That is, the self-mobile device calculates its heading angle according to two adjacent RTK positioning and uses this heading angle as the predicted angle. The previous positioning is RTK positioning acquired by the self-mobile device before acquiring the current RTK positioning, and adjacent to the current RTK positioning For example, the self-mobile device sequentially determines 10 RTK positioning per second, labeled as RTK positioning 1, RTK positioning 2, ..., RTK positioning 10. When the current RTK positioning is RTK positioning 10, the self-mobile device determines the predicted angle according to RTK positioning 9 and RTK positioning 10.

For another example, when the self-mobile device switches from a non-working state to a working state, it determines that the surrounding environment of the self-mobile device has changed before and after the state switch. After resuming the working state, the first RTK positioning obtained is designated as RTK positioning 1. In this case, the self-mobile device determines the predicted angle according to RTK positioning 1 and the target RTK positioning. The target RTK positioning refers to the most recently obtained and stored RTK positioning when the self-mobile device enters the non-working state.

Taking the current RTK positioning as $P_N(x_N, y_N)$ and the previous positioning as $P_{N-1}(x_{N-1}, y_{N-1})$, the predicted angle $\theta$ can be calculated by the following Formula (1):

$$\theta = \text{atan2}\ (y_N - y_{N-1},\ x_N - x_{N-1}) \quad \text{Formula (1)}$$

It is to be noted that after the self-mobile device switches from the non-working state to the working state, if the surrounding environment of the self-mobile device has changed before and after the state switch, the device moves forward, thereby entering a traveling state. During the travel, the self-mobile device continuously acquires visual images and RTK positioning. Each time a visual image and RTK positioning are obtained, a repositioning operation is performed. If the repositioning is successful, further traveling is not required. If the repositioning is unsuccessful, the self-mobile device continues to travel. Therefore, the predicted position and the predicted angle continuously change.

At 302, repositioning of the self-mobile device is performed according to the predicted position, the predicted angle, and the current visual images.

The self-mobile device performs repositioning according to the predicted position, the predicted angle, and the current visual images. The predicted position, predicted angle, and the like characterize the motion features of the self-mobile device. It can be seen that the self-mobile device combines the current visual image with motion characteristics to perform repositioning and determines whether the reference station has been moved according to the repositioning result, without mounting additional sensors, thereby enhancing the positioning accuracy of the self-mobile device.

Optionally, in the embodiments above, when the self-mobile device performs repositioning according to the predicted position, predicted angle, and current visual image, feature points in the environmental map are projected onto the current visual image according to the predicted position and the predicted angle to obtain a matched first point count. When the first point count is greater than a first threshold, it is determined that the repositioning of the self-mobile device is successful.

Exemplarily, after the self-mobile device determines the predicted angle and the predicted position, feature points in the environmental map are projected onto the current visual image according to the predicted angle and the predicted position, and then matched with feature points in the current visual image to obtain a matched first point count. The feature points may, for example, be three-dimensional (3D) feature points, which are not limited in the embodiments of the present application. The feature point matching solution includes, but is not limited to, methods such as scale-invariant feature transform (SIFT) matching and oriented brief (ORB) feature point matching.

The environmental map is stored locally on the self-mobile device. The self-mobile device preemptively creates the environmental map using VSLAM positioning technology fused with RTK. The environmental map comprises three-dimensional visual feature points, and the environmental map and RTK are in the same coordinate system. The VSLAM positioning technology fused with RTK includes, but is not limited to, methods such as laser spot detector-simultaneous localization and mapping (LSD-SLAM), ORB-SLAM, semi-direct monocular visual odometry (SVO), and dense tracking and mapping (DTAM).

In the embodiments of the present application, the environmental map comprises distinctive feature points, which may, for example, be 2D feature points, 3D feature points, or the like. FIG. 4 is a schematic diagram of an environmental map in a detection method for reference station position changes according to an embodiment of the present application.

Referring to FIG. 4, the thick solid lines represent boundaries, comprising the outer boundary of the working area and the boundaries of internal restricted zones. The black dots represent three-dimensional feature points.

During the feature point matching process, for any feature point in the environmental map, if the self-mobile device can find a corresponding feature point in the current visual image, the feature point is considered successfully matched. The self-mobile device accumulates the number of successfully matched feature points to obtain the first point count.

Thereafter, the self-mobile device determines whether the first point count is greater than a first threshold. If the first point count is greater than the first threshold, it indicates that the reference station has not been moved, and the self-mobile device has successfully completed repositioning. Thereafter, the self-mobile device plans a path within the environmental map according to the current RTK positioning.

If the first point count is less than or equal to the first threshold, it may indicate that the reference station has been moved, or that the self-mobile device has been moved.

By adopting this solution, the self-mobile device determines the predicted position and predicted angle according to the current RTK positioning and the current visual image, determines the first point count according to the predicted position and the predicted angle, and then determines whether the reference station has been moved according to the first point count, achieving high accuracy and fast processing speed.

Optionally, in the embodiments above, when the self-mobile device fails to perform repositioning, that is, when the first point count is less than or equal to the first threshold, the self-mobile device performs pure visual positioning on the basis of a BOW dictionary. During the pure visual positioning process, the self-mobile device determines a target key frame from a plurality of key frames in the environmental map. Thereafter, the feature points in the target key frame are projected onto the current visual images to obtain the matched second point count. When the second point count is greater than the second threshold, the self-mobile device determines that the reference station has been moved, and the second threshold is greater than the first threshold.

During the pure visual positioning process on the basis of the BOW dictionary, the self-mobile device determines a sparse vector of the current visual image and sparse vectors of environmental frames in the environmental image. For clarity, the sparse vector of the current visual image is hereinafter referred to as a first vector, and the sparse vectors of the key frames are hereinafter referred to as second vectors. Thereafter, the self-mobile device determines the similarity between the first vector and each of the second vectors, thereby obtaining the similarity between the current visual image and the key frames.

Next, the self-mobile device ranks the key frames in descending order of similarity and selects one or more of the top-ranked key frames as the target key frame.

Thereafter, the self-mobile device performs matching of feature points. That is, the feature points in the target key frame are projected onto the current visual images to obtain the matched second point count. After obtaining the second point count, the self-mobile device determines whether the second point count is greater than the second threshold. If the second point count is greater than the second threshold, it indicates that the reference station has been moved. If the second point count is less than or equal to the second threshold, it indicates that pure visual positioning on the basis of the BOW dictionary has failed. The second point count is greater than the first point count, which helps prevent false positives in repositioning.

By adopting this solution, after the self-mobile device fails to perform repositioning according to the current RTK positioning and the current visual image, a subsequent pure visual repositioning on the basis of the BOW dictionary is performed to obtain the second point count, which is then used to determine whether the reference station has been moved, achieving high accuracy and fast processing speed.

Optionally, in the embodiments above, when the self-mobile device fails to perform pure visual repositioning on the basis of the BOW dictionary, that is, when the second point count is less than or equal to the first point count, the self-mobile device determines that it cannot determine whether the reference station has been moved. Thereafter, the self-mobile device continues to travel.

Exemplarily, if the self-mobile device performs two repositioning methods and fails in each, it then continues to travel. During the travel, the self-mobile device continues to acquire visual images and RTK positioning, and executes the solution illustrated in the flowchart of FIG. 2. The two repositioning methods comprise repositioning according to the current visual image and current RTK positioning, and pure visual repositioning on the basis of the BOW dictionary.

By adopting this solution, if the self-mobile device fails in two repositioning methods, it continues to travel to acquire new visual images and RTK positioning, and re-determines whether the reference station has been moved, thereby achieving an accurate determination of whether the reference station has been moved.

FIG. 5 is a flowchart of projecting feature points in an environmental map onto current visual images during first repositioning in a detection method for reference station position changes according to an embodiment of the present application. This embodiment comprises:

At 501, a pose matrix corresponding to a current pose of the self-mobile device is determined according to the predicted position and the predicted angle.

For example, the self-mobile device calculates the pose matrix $T_{vw}$ at the current moment according to the predicted position and the predicted angle.

It is to be noted that, in this case, the self-mobile device calculates the pose matrix $T_{vw}$ at the current moment according to the predicted position and the predicted angle. However, the embodiments of the present application are not limited thereto. In other feasible implementations, the self-mobile device may also obtain the pose matrix $T_{vw}$ at the current moment through repositioning or other methods.

At 502, position coordinates of the feature points in the environmental map in a camera coordinate system are determined according to the pose matrix and a transformation matrix, the transformation matrix being a transformation matrix from a center of the self-mobile device to a camera center.

Exemplarily, during the process of projecting 3D feature points from the environmental map onto the current visual image, it is to be noted that the environmental map is generally defined in the world coordinate system. Therefore, it is first necessary to determine a transformation formula for converting the 3D feature points in the environmental map from the world coordinate system to the camera coordinate system.

Exemplarily, the self-mobile device determines two parameters, $R_{vw}$ and $t_{vw}$, according to the pose matrix $T_{vw}$ at the current moment, which are used to establish the transformation formula for converting 3D feature points in the environmental map from the world coordinate system to the camera coordinate system.

Assuming that the coordinates of a 3D feature point in the environmental map in the world coordinate system are P, and the position of the feature point in the camera coordinate system is X(x, y, z), the transformation formula is given by Formula (2):

$$X = T_{cv}(R_{vw}P + t_{vw}) \quad \text{Formula (2)}$$

wherein $T_{cv}$ is the transformation matrix from the center of the self-mobile device to the camera center, which is a fixed parameter determined by the mounting configuration of the camera on the self-mobile device; and $R_{vw}$ and $t_{vw}$ are two parameters obtained by inverting the pose matrix $T_{vw}$ at the current moment, as shown in Formula (3):

$$T_{vw}^{-1} = \begin{bmatrix} R_{vw} & t_{vw} \\ 0 & 1 \end{bmatrix} \quad \text{Formula (3)}$$

After obtaining the transformation formula, the self-mobile device can determine the position coordinates of each feature point in the environmental map in the camera coordinate system, i.e., the X described above. Thereafter, the self-mobile device projects the position coordinates of each feature point in the camera coordinate system onto the current visual image. For example, the self-mobile device accomplishes this through the projection function $\pi(X)$. X is the input information, i.e., the position of the feature point in the camera coordinate system, X(x, y, z). When the omnidirectional model is adopted, the calculation process is illustrated in Formula (4):

$$\pi(X) = \begin{bmatrix} f_x \frac{x}{z + \|X\|\xi} \\ f_y \frac{y}{z + \|X\|\xi} \end{bmatrix} + \begin{bmatrix} c_x \\ c_y \end{bmatrix} = \begin{bmatrix} u_x \\ u_y \end{bmatrix} \quad \text{Formula (4)}$$

wherein $f_x$, $f_y$, $c_x$, $c_y$, and $\xi$ are the intrinsic parameters of the camera, calibrated at the time of manufacture, and $\|X\|$ represents the Euclidean distance.

$u_x$ and $u_y$ represent the pixel coordinates of the feature point projected onto the image plane from the camera coordinate system, corresponding to the position of the feature point X(x, y, z) in the camera coordinate system. These coordinates are used to indicate the position of the feature point on the image plane during feature point matching. During the feature point matching process, the self-mobile device calculates the position of a 3D feature point from the environmental image on the current visual image. If a feature point can be found near this position, descriptor matching for the feature point is performed.

At 503, the feature points in the environmental map are projected onto the current visual images according to the position coordinates of the feature points in the environmental map in the camera coordinate system, to obtain the matched first point count.

During the feature point matching process, for any feature point in the environmental map, if the matching is successful, the self-mobile device accumulates the number of successfully matched feature points, thereby obtaining the first point count.

By adopting this solution, the self-mobile device calculates the pose matrix at the current moment according to the predicted position and the predicted angle. The feature points from the environmental map are projected onto the current visual image according to the position matrix, the transformation matrix, and the like. The projection process is fast and highly accurate.

Optionally, in the embodiments above, when the self-mobile device switches from a non-working state to a working state, the control of the device's travel is as follows: First, the self-mobile device is controlled to acquire the environmental image, and according to the acquired environmental image and the environmental image before the state switch, it is determined whether there has been a change in the surrounding environment of the self-mobile device before and after the state switch. Thereafter, if the environmental images indicate that the surrounding environment of the self-mobile device has changed, the self-mobile device is controlled to travel.

Exemplarily, after the self-mobile device switches from a non-working state to a working state, repositioning is triggered only when preset conditions are met. One such preset condition, for example, may be a change in the surrounding environment of the self-mobile device. That is, after the self-mobile device switches from a non-working state to a working state, it first compares the environmental images before and after the state switch to determine whether the surrounding environment has changed. Repositioning is triggered only if there is a change in the surrounding environment.

By adopting this solution, it is determined whether the reference station has been moved only when the surrounding environment of the self-mobile device has changed before and after the state switch, by combining the current visual image and the current RTK positioning repositioning, thereby enhancing the accuracy of detecting reference station position changes.

Optionally, in the embodiments above, after the self-mobile device switches from a non-working state to a working state, if the environmental image indicates that the surrounding environment of the self-mobile device has not changed, the self-mobile device further compares the target positioning with the initial positioning. When the distance between the target positioning and the initial positioning is greater than a preset distance, the self-mobile device determines that the reference station has been moved. The target positioning is RTK positioning acquired by the self-mobile device before entering the non-working state, and the initial positioning is RTK positioning acquired by the self-mobile device after switching to the working state.

Exemplarily, after the self-mobile device switches from a non-working state to a working state, if the environmental image indicates that the surrounding environment of the self-mobile device has not changed, one possible reason is that the self-mobile device did not move during the non-working state, meaning it neither moved nor rotated. Another possible reason is that the self-mobile device did move during the non-working state, such as displacement or rotation, but the surrounding environment after the movement is similar to the surrounding environment before the movement. In an example of the self-mobile device being a lawn mower, during the non-working state of the self-mobile device, the front of the device faces a large white wall, with the surrounding area being a lawn. The lawn has no distinct features, such as large trees, flower beds, or the like. During the non-working state, the self-mobile device is moved to another location, still facing the large white wall, with the surrounding area being a lawn. After the self-mobile device enters the working state, it is determined that the surrounding environment has not changed.

To prevent mis-determination, after the self-mobile device determines that the surrounding environment has not changed before and after the state switch, it further determines whether the RTK positioning has changed before and after the state switch of the self-mobile device, that is, it determines whether the distance between the target positioning before the state switch and the initial positioning after the state switch is greater than a preset distance. When the distance between the target positioning before the state switch and the initial positioning after the state switch is greater than a preset distance, the self-mobile device determines that the reference station has been moved. When the distance between the target positioning before the state switch and the initial positioning after the state switch is less than or equal to the preset distance, the self-mobile device determines that the reference station has not been moved.

By adopting this solution, after the self-mobile device switches from a non-working state to a working state, if the surrounding environment of the self-mobile device has not changed before and after the state switch, it further determines whether the RTK positioning has changed before and after the state switch of the self-mobile device, thereby accurately determining whether the reference station has been moved and avoiding mis-determination.

Optionally, in the embodiments above, when the self-mobile device switches from a non-working state to a working state, it compares the target image with the initial visual image. If the similarity between the target image and the initial visual image is less than a preset similarity, it is determined that the surrounding environment of the self-mobile device has changed. The target image and the initial visual image are adjacent. The target image is an image captured by the self-mobile device before entering the non-working state, and the initial visual image is an image captured by the self-mobile device after switching to the working state.

Exemplarily, when the self-mobile device switches from a non-working state to a working state, to determine whether the surrounding environment of the self-mobile device has changed before and after the state switch, the target image captured before the state switch and the initial visual image captured after the state switch are compared. The target image is the last frame or plurality of frames of the image captured before the self-mobile device enters the non-working state, and the initial visual image is the first image captured after the self-mobile device switches from the non-working state to the working state.

In one approach, the self-mobile device determines the similarity between the target image and the initial visual image using a feature point matching method. In this approach, the self-mobile device extracts feature points from the target image and the initial visual image. If the number of matched feature points is greater than a certain threshold, it is determined that the similarity between the target image and the initial visual image is greater than or equal to the preset similarity, indicating that the surrounding environment of the self-mobile device has not changed before and after the state switch. If the number of matched feature points does not exceed the threshold, it is determined that the similarity between the target image and the initial visual image is less than the preset similarity, indicating that the surrounding environment of the self-mobile device has changed before and after the state switch.

In another approach, the self-mobile device compares the target image and the initial visual image pixel by pixel. If the number of similar pixels exceeds a preset pixel threshold, it is determined that the similarity between the target image and the initial visual image is greater than or equal to the preset similarity, indicating that the surrounding environment of the self-mobile device has not changed before and after the state switch. If the number of similar pixels does not exceed the pixel threshold, it is determined that the similarity between the target image and the initial visual image is less than the preset similarity, indicating that the surrounding environment of the self-mobile device has changed before and after the state switch.

By adopting this solution, the self-mobile device determines whether the surrounding environment of the self-mobile device has changed before and after the state switch using image comparison, providing high accuracy and fast processing speed.

Optionally, in the embodiments above, when the self-mobile device switches from a non-working state to a working state, it compares the target image with the initial visual image. If the similarity between the target image and the initial visual image is greater than or equal to the preset similarity, it is determined that the surrounding environment of the self-mobile device has not changed before and after the state switch. The target image and the initial visual image are adjacent. The target image is an image captured by the self-mobile device before entering the non-working state, and the initial visual image is an image captured by the self-mobile device after switching to the working state.

The specific determination process can be referred to in the processing process described above when the similarity between the target image and the initial visual image is less than the preset similarity, which is not repeated here.

Optionally, in the embodiments above, during the normal operation of the self-mobile device, i.e., when it is in the working state, the latest visual images and the latest RTK positioning are acquired in real time. When the self-mobile device switches from the working state to the non-working state, the latest visual images and the latest RTK positioning are stored, such that after the self-mobile device switches from the non-working state to the working state, the latest visual images serve as the target image, and the latest RTK positioning serves as the target positioning.

Exemplarily, during the operation of the self-mobile device, it continuously acquires visual images and RTK positioning. Each time the latest visual image and the latest RTK positioning are acquired, the latest visual image overwrites the previously acquired visual image, and the latest RTK positioning overwrites the previously acquired RTK positioning. Thereafter, once the self-mobile device switches from the working state to the non-working state, the latest visual image and the latest RTK positioning are stored in non-volatile memory such as flash memory, embedded multi-media card (EMMC), or the like.

Thereafter, when the self-mobile device switches from the non-working state to the working state, the self-mobile device takes the latest visual image stored in the non-volatile memory as the target image, and the latest RTK positioning stored in the non-volatile memory as the target positioning. Then, on the basis of the target image and the initial visual image captured after entering the working state, it is determined whether the surrounding environment of the self-mobile device has changed before and after the state switch. If the surrounding environment of the self-mobile device has not changed before and after the state switch, it is determined whether the reference station has been moved on the basis of the target positioning and the initial positioning obtained after entering the working state. If the surrounding environment of the self-mobile device has changed before and after the state switch, the self-mobile device travels forward and determines whether the reference station has been moved on the basis of the current RTK positioning, the current visual image, and the like.

By adopting this solution, the self-mobile device continuously acquires the latest visual image and the latest RTK positioning while in the working state. Once the self-mobile device switches from the working state to the non-working state, the latest visual image and the latest RTK positioning are taken as the target image and target positioning, respectively. This facilitates the determination of whether the reference station has moved when the self-mobile device switches from the non-working state to the working state.

Optionally, in the embodiments above, the RTK positioning is in a fixed solution state.

Exemplarily, RTK positioning has three types of solution states: fixed solution, float solution, and single-point solution. The fixed solution provides the highest positioning accuracy, typically less than 2 cm. The float solution has a larger error, and the single-point solution has the largest error. The fixed solution and float solution are distinguished by the "ambiguity". When the ambiguity is an integer, it is a fixed solution, and when the ambiguity is not an integer, it is a float solution. Any ambiguity calculation method may be used in the embodiments of the present application. The single-point solution indicates that no differential signal from any reference station is used, so its accuracy is similar to that of a standard global positioning system (GPS).

Therefore, to accurately determine whether the reference station has been moved, the RTK positioning in the embodiments above, such as target positioning, initial positioning, current RTK positioning, latest RTK positioning, and the like, all use a fixed solution state.

By adopting this solution, the RTK positioning in the embodiments of the present application uses a fixed solution state, offering high accuracy and achieving an accurate determination of whether the reference station has been moved.

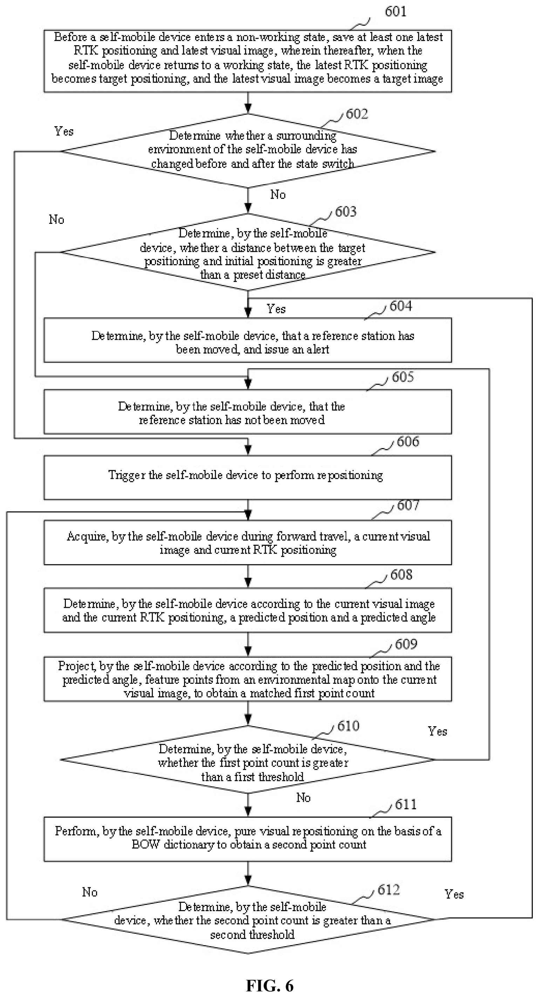

FIG. 6 is another flowchart of a detection method for reference station position changes according to an embodiment of the present application. This embodiment comprises:

At 601, before the self-mobile device enters the non-working state, at least one latest RTK positioning and the latest visual image are saved. Thereafter, when the self-mobile device returns to the working state, the latest RTK positioning becomes the target positioning, and the latest visual image becomes the target image.

Exemplarily, when the self-mobile device is operating normally, it continuously acquires the latest visual image and the latest RTK positioning. Once the self-mobile device switches from the working state to the non-working state, the latest visual image and the latest RTK positioning are taken as the target image and the target positioning, respectively. The non-working state comprises a pause state, a sleep state, or a power-off state.

At 602, after the self-mobile device returns to the working state, it determines whether the surrounding environment of the self-mobile device has changed before and after the state switch. If the surrounding environment of the self-mobile device has not changed before and after the state switch, step 603 is performed. If the surrounding environment of the self-mobile device has changed before and after the state switch, step 606 is performed.

Exemplarily, after the self-mobile device returns to the working state, it captures the surrounding environment to obtain the current visual image. Thereafter, the self-mobile device determines the similarity between the current visual image and the target image, and according to the similarity, it is determined whether the surrounding environment of the self-mobile device has changed before and after the state switch.

At 603, the self-mobile device determines whether a distance between target positioning and initial positioning is greater than a preset distance. If the distance between the target positioning and the initial positioning is greater than the preset distance, step 604 is performed. If the distance between the target positioning and the initial positioning is less than or equal to the preset distance, step 605 is performed.

Exemplarily, after the self-mobile device returns to the working state, the initial positioning is obtained on the basis of RTK technology. Thereafter, it is determined whether the reference station has been moved according to the distance between the initial positioning and the target positioning.

At 604, the self-mobile device determines that the reference station has been moved and issues an alert.

At 605, the self-mobile device determines that the reference station has not been moved.

At 606, the self-mobile device is triggered to perform repositioning.

Exemplarily, after the self-mobile device switches from a non-working state to a working state, if the environmental image indicates that the surrounding environment of the self-mobile device has changed before and after the state switch, it could be that the self-mobile device has been moved, or it could be that the self-mobile device has not been moved to a different position, but the surrounding environment has changed. In this case, the self-mobile device is triggered to perform repositioning.

At 607, the self-mobile device travels forward, acquiring a current visual image and current RTK positioning during the travel.

At 608, the self-mobile device determines a predicted position and a predicted angle according to the current visual image and the current RTK positioning.

At 609, the self-mobile device projects feature points from an environmental map onto the current visual image according to the predicted position and the predicted angle, to obtain the matched first point count.

At 610, the self-mobile device determines whether the first point count is greater than the first threshold. If the first point count is greater than the first threshold, the repositioning is successful, and step 605 is performed. If the first point count is less than or equal to the first threshold, step 611 is performed.

At 611, the self-mobile device performs pure visual repositioning on the basis of a BOW dictionary to obtain a second point count.

Exemplarily, the target key frame is determined from a plurality of key frames in the environmental map, and the feature points from the target key frame are projected onto the current visual image to obtain the matched second point count.

At 612, the self-mobile device determines whether the second point count is greater than a second threshold. If the second point count is greater than the second threshold, the repositioning is successful, and step 604 is performed. If the second point count is less than or equal to the second threshold, the repositioning is deemed failed, and step 607 is performed.

Exemplarily, if the matched point count is greater than the second threshold, it indicates that the self-mobile device has found a better repositioning result than the predicted position, that is, the actual position of the self-mobile device does not match the predicted position, and it is thus determined that the reference station has been moved, for example, moved by at least 10 cm.

If the matched point count is less than or equal to the second threshold, it indicates that the repositioning has failed, which may be due to significant changes in the surrounding scene, or because the self-mobile device is located outside the environmental map, causing the pure visual repositioning on the basis of the BOW dictionary to fail. In this case, it is impossible to determine whether the reference station has been moved. In this case, the self-mobile device continues to move forward. For example, the self-mobile device actively travels forward. For another example, the self-mobile device prompts the user, allowing the user to control the self-mobile device to continue traveling forward. During the travel, visual images and RTK positioning continue to be collected, and step 607, along with the subsequent steps, is performed.

It is to be noted that the RTK positioning in the embodiments above refers to RTK fixed solution positioning. This is because, with a non-fixed solution, the RTK positioning error is relatively large, making it unsuitable for accurately determining whether the reference station has been moved.

Below, taking the self-mobile device as a lawn mower and combining it with a specific application scenario, the detection method for reference station position changes, as described above, is explained in detail.

Application scenario 1:

During the normal operation of the self-mobile device, it continuously acquires the latest visual images and the latest RTK positioning. When the self-mobile device switches from the working state to the non-working state, the latest visual image and the latest RTK positioning are stored in the non-volatile memory. The latest visual image shows the self-mobile device facing a large white wall, with the surrounding area being a lawn A. The lawn A has no distinct features, such as large trees, flower beds, or the like.

Case a: During the non-working state of the self-mobile device, no movement occurs, but the reference station has been moved.

After a period of time, the self-mobile device re-enters the working state, and before resuming operation, it determines whether the reference station has been moved. During the determination process, the self-mobile device captures the current environment to obtain the initial visual image, performs positioning to obtain the initial positioning, and retrieves the latest visual image and the latest RTK positioning from the non-volatile memory, which are used as the target image and target positioning, respectively.

Thereafter, the self-mobile device determines the similarity between the initial visual image and the target image. The initial visual image corresponds to the lawn A, and the target image also corresponds to the lawn A. In this case, the self-mobile device determines that the initial visual image and the target image are highly similar, and temporarily assumes that the surrounding environment of the self-mobile device has not changed before and after the state switch. Thereafter, the self-mobile device determines the distance between the initial positioning and the target positioning. Since the distance between the initial positioning and the target positioning is relatively large, the self-mobile device determines that the reference station has been moved.

Case b: During the non-working state of the self-mobile device, movement occurs, but the reference station has been moved.

After the self-mobile device enters the non-working state on the lawn A, it is manually moved to a lawn B. The environmental difference between the lawn A and the lawn B is considerable. After the self-mobile device switches to the working state on Lawn B, it detects that the surrounding environment has changed. Thereafter, the self-mobile device travels forward and performs repositioning.

During the travel, after each acquisition of the current visual image and current RTK positioning, the predicted angle and the predicted position are determined. Then, on the basis of the predicted angle and the predicted position, the 3D feature points from the environmental image are projected onto the current visual image to obtain the matched first point count.

Since the first point count is relatively low, the self-mobile device performs pure visual repositioning on the basis of the BOW dictionary to obtain the matched second point count, i.e., the number of feature points matched between the target key frame in the environmental image and the current visual image. When the second point count is greater than the second threshold, the self-mobile device considers the pure visual repositioning successful, determines that the reference station has been moved, and issues an alert. When the second point count is less than or equal to the second threshold, the self-mobile device considers the pure visual repositioning failed, continues to move forward, and executes the repositioning logic described above.

Case c: During the non-working state of the self-mobile device, movement occurs, but the reference station has been moved.

After the self-mobile device enters the non-working state on the lawn A, it is manually moved to a lawn B. The environmental difference between the lawn A and the lawn B is considerable. After the self-mobile device switches to the working state on Lawn B, it detects that the surrounding environment has changed. Thereafter, the self-mobile device travels forward and performs repositioning.

During the travel, after each acquisition of the current visual image and current RTK positioning, the predicted angle and the predicted position are determined. Then, on the basis of the predicted angle and the predicted position, the 3D feature points from the environmental image are projected onto the current visual image to obtain the matched first point count. Since the first point count is greater than the first threshold, the self-mobile device considers the repositioning successful and determines that the reference station has not been moved.

The following are apparatus embodiments of the present application, which can be used to implement the method embodiments of the present application. For details not disclosed in the apparatus embodiments of the present application, refer to the method embodiments of the present application.

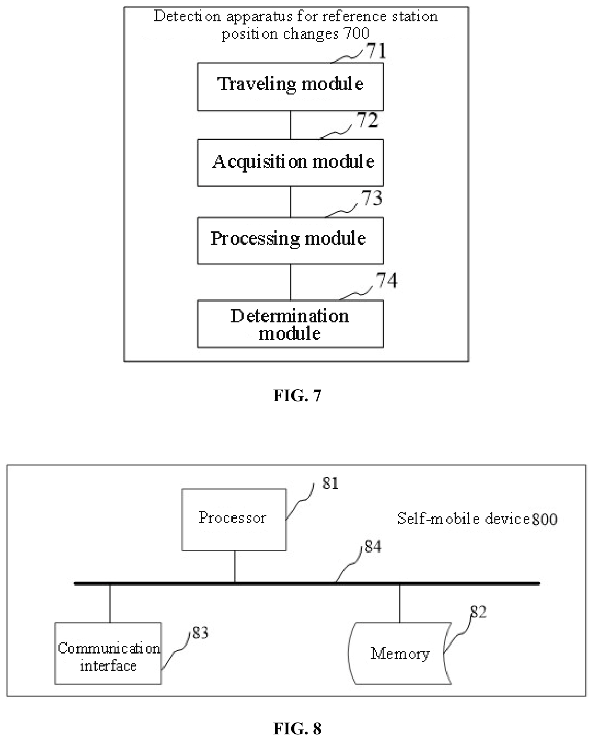

FIG. 7 is a schematic diagram of a detection apparatus for reference station position changes according to an embodiment of the present application. The detection apparatus 700 for reference station position changes comprises:

a traveling module 71, configured to, when a self-mobile device switches from a non-working state to a working state, control the self-mobile device to travel;

an acquisition module 72, configured to control the self-mobile device to acquire visual images and real-time kinematic (RTK) positioning during the travel of the self-mobile device;

a processing module 73, configured to perform, according to the visual images and the RTK positioning, repositioning of the self-mobile device; and

a determination module 74, configured to, when the repositioning of the self-mobile device is successful, determine that a reference station has not been moved, the reference station being configured to provide differential signals to the self-mobile device such that the self-mobile device acquires RTK positioning according to the differential signals.

In a feasible implementation, the processing module 73 is configured to: determine, according to current RTK positioning acquired by the self-mobile device, a predicted position of the self-mobile device, the RTK positioning comprising current RTK positioning, and the visual images comprising current visual images; determine, according to the current RTK positioning and previous positioning, a predicted angle of the self-mobile device, the previous positioning being RTK positioning acquired by the self-mobile device before acquiring the current RTK positioning and adjacent to the current RTK positioning; and perform, according to the predicted position, the predicted angle, and the current visual images, repositioning of the self-mobile device.

In a feasible implementation, when performing, according to the predicted position, the predicted angle, and the current visual images, repositioning of the self-mobile device, the processing module 73 is configure to: project, according to the predicted position and the predicted angle, feature points in an environmental map onto the current visual images to obtain a matched first point count; and when the first point count is greater than a first threshold, determine that the repositioning of the self-mobile device is successful.

In a feasible implementation, the processing module 73 is further configured to: when the repositioning of the self-mobile device fails, determine a target key frame from a plurality of key frames in an environmental map, the target key frame being a key frame with a highest similarity to the current visual images among the plurality of key frames; project feature points in the target key frame onto the current visual images to obtain a matched second point count; and when the second point count is greater than a second threshold, determine that the reference station has been moved, the second threshold being greater than the first threshold.

In a feasible implementation, the processing module 73 is further configured to: when the second point count is less than or equal to the second threshold, determine that it cannot be determined whether the reference station has been moved; and continue to control the self-mobile device to travel.

In a feasible implementation, when projecting, according to the predicted position and the predicted angle, feature points in an environmental map onto the current visual images to obtain a matched first point count, the processing module 73 is configured to: determine, according to the predicted position and the predicted angle, a pose matrix corresponding to a current pose of the self-mobile device; determine, according to the pose matrix and a transformation matrix, position coordinates of the feature points in the environmental map in a camera coordinate system, the transformation matrix being a transformation matrix from a center of the self-mobile device to a camera center; and project, according to the position coordinates of the feature points in the environmental map in the camera coordinate system, the feature points in the environmental map onto the current visual images to obtain the matched first point count.

In a feasible implementation, the processing module 73 is configured to, when the self-mobile device switches from the non-working state to the working state, control the self-mobile device to acquire environmental images.

The traveling module 71 is configured to, if the environmental images indicate that a surrounding environment of the self-mobile device has changed, control the self-mobile device to travel.

In a feasible implementation, the processing module 73 is further configured to: after the self-mobile device switches from the non-working state to the working state, if the environmental images indicate that the surrounding environment of the self-mobile device has not changed, compare target positioning with initial positioning, the target positioning being RTK positioning acquired by the self-mobile device before entering the non-working state, and the initial positioning being RTK positioning acquired by the self-mobile device after switching to the working state; and when a distance between the target positioning and the initial positioning is greater than a preset distance, determine that the reference station has been moved.

In a feasible implementation, the processing module 73 is further configured to: compare a target image with an initial visual image, the target image and the initial visual image being adjacent, the target image being an image captured by the self-mobile device before entering the non-working state, and the initial visual image being an image captured by the self-mobile device after switching to the working state; and when a similarity between the target image and the initial visual image is less than a preset similarity, determine that the surrounding environment of the self-mobile device has changed.

In a feasible implementation, the processing module 73 is further configured to: compare a target image with an initial visual image, the target image and the initial visual image being adjacent, the target image being an image captured by the self-mobile device before entering the non-working state, and the initial visual image being an image captured by the self-mobile device after switching to the working state; and when a similarity between the target image and the initial visual image is greater than or equal to a preset similarity, determine that the surrounding environment of the self-mobile device has not changed.

In a feasible implementation, before comparing a target image with an initial visual image, the processing module 73 is further configured to: when the self-mobile device is in the working state, acquire the latest visual images and the latest RTK positioning in real time; and when the self-mobile device switches from the working state to the non-working state, store the latest visual images and the latest RTK positioning, such that after the self-mobile device switches from the non-working state to the working state, the latest visual images serve as the target image, and the latest RTK positioning serves as the target positioning.

In a feasible implementation, the RTK positioning is in a fixed solution state.

In a feasible implementation, the non-working state comprises any one of the following states: a pause state, a sleep state, or a power-off state.

The control apparatus provided by the embodiments of the present application can perform the actions of the cleaning device in the embodiments above. The implementation principles and technical effects are similar, which are not repeated here.

FIG. 8 is a schematic structural diagram of a self-mobile device according to an embodiment of the present application. As shown in FIG. 8, the self-mobile device 800 comprises:
a processor 81 and a memory 82.

The memory 82 stores computer instructions.

The processor 81 executes the computer instructions stored in the memory 82, causing the processor 81 to perform the control method of the self-mobile device as described above.

The specific implementation process of the processor 81 can be referred to in the method embodiments above. The implementation principles and technical effects are similar, which are not be repeated here in this embodiment.

Optionally, the self-mobile device 800 further comprises a communication component 83. The processor 81, the memory 82, and the communication component 83 are connected via a bus 84.

The embodiments of the present application further provide a computer-readable storage medium having computer instructions stored thereon, wherein the computer instructions, when executed by a processor, implement a detection method for reference station position changes, as described above.

The embodiments of the present application further provide a computer program product comprising a computer program, and the computer program, when executed by a processor, implements a detection method for reference station position changes, as described above.

After considering the description and the practice of the present disclosure disclosed herein, a person skilled in

# EP 4 741 883 A1

the art readily conceives of other embodiments of the present application. The present application is intended to cover any modifications, uses, or adaptations of the present application, which follow the general principles of the present application and comprise those known common knowledge or conventional techniques in the technical field that are not specifically disclosed in the present application. The description and embodiments are to be considered as exemplary only. The true scope and spirit of the present application are defined by the claims set forth below.

It is to be understood that the present application is not limited to the exact structures described above and shown in the drawings, and various modifications and changes can be made without departing from the scope thereof. The scope of the present application is limited only by the appended claims.

## Claims

1.   A detection method for reference station position changes, comprising:

   when a self-mobile device switches from a non-working state to a working state, controlling the self-mobile device to travel;
   controlling the self-mobile device to acquire visual images and real-time kinematic (RTK) positioning during a travel of the self-mobile device;
   performing, according to the visual images and the RTK positioning, repositioning of the self-mobile device; and
   when the repositioning of the self-mobile device is successful, determining that a reference station has not been moved, the reference station being configured to provide differential signals to the self-mobile device such that the self-mobile device acquires the RTK positioning according to the differential signals.

2.   The method according to claim 1, wherein performing, according to the visual images and the RTK positioning, repositioning of the self-mobile device comprises:

   determining, according to current RTK positioning acquired by the self-mobile device, a predicted position of the self-mobile device, the RTK positioning comprising the current RTK positioning, and the visual images comprising current visual images;
   determining, according to the current RTK positioning and previous positioning, a predicted angle of the self-mobile device, the previous positioning being RTK positioning acquired by the self-mobile device before acquiring the current RTK positioning and adjacent to the current RTK positioning; and
   performing, according to the predicted position, the predicted angle, and the current visual images, repositioning of the self-mobile device.

3.   The method according to claim 2, wherein performing, according to the predicted position, the predicted angle, and the current visual images, repositioning of the self-mobile device comprises:

   projecting, according to the predicted position and the predicted angle, feature points in an environmental map onto the current visual images to obtain a matched first point count; and
   when the first point count is greater than a first threshold, determining that the repositioning of the self-mobile device is successful.

4.   The method according to claim 2, further comprising:

   when the repositioning of the self-mobile device fails, determining a target key frame from a plurality of key frames in an environmental map, the target key frame being a key frame with a highest similarity to the current visual images among the plurality of key frames;
   projecting feature points in the target key frame onto the current visual images to obtain a matched second point count; and
   when the second point count is greater than a second threshold, determining that the reference station has been moved, the second threshold being greater than the first threshold.

5.   The method according to claim 4, further comprising:

   when the second point count is less than or equal to the second threshold, determining that it cannot be determined whether the reference station has been moved; and
   continuing to control the self-mobile device to travel.

17

**6.** The method according to claim 3, wherein projecting, according to the predicted position and the predicted angle, feature points in the environmental map onto the current visual images to obtain the matched first point count comprises:

determining, according to the predicted position and the predicted angle, a pose matrix corresponding to a current pose of the self-mobile device;
determining, according to the pose matrix and a transformation matrix, position coordinates of the feature points in the environmental map in a camera coordinate system, the transformation matrix being a transformation matrix from a center of the self-mobile device to a camera center; and
projecting, according to the position coordinates of the feature points in the environmental map in the camera coordinate system, the feature points in the environmental map onto the current visual images to obtain the matched first point count.

**7.** The method according to any one of claims 1 to 6, wherein when the self-mobile device switches from the non-working state to the working state, controlling the self-mobile device to travel comprises:

when the self-mobile device switches from the non-working state to the working state, controlling the self-mobile device to acquire environmental images; and
if the environmental images indicate that a surrounding environment of the self-mobile device has changed, controlling the self-mobile device to travel.

**8.** The method according to claim 7, further comprising:

after the self-mobile device switches from the non-working state to the working state, if the environmental images indicate that the surrounding environment of the self-mobile device has not changed, comparing target positioning with initial positioning, the target positioning being RTK positioning acquired by the self-mobile device before entering the non-working state, and the initial positioning being RTK positioning acquired by the self-mobile device after switching to the working state; and
when a distance between the target positioning and the initial positioning is greater than a preset distance, determining that the reference station has been moved.

**9.** The method according to claim 7, further comprising:

comparing a target image with an initial visual image, the target image and the initial visual image being adjacent, the target image being an image captured by the self-mobile device before entering the non-working state, and the initial visual image being an image captured by the self-mobile device after switching to the working state; and
when a similarity between the target image and the initial visual image is less than a preset similarity, determining that the surrounding environment of the self-mobile device has changed.

**10.** The method according to claim 7, further comprising:

comparing a target image with an initial visual image, the target image and the initial visual image being adjacent, the target image being an image captured by the self-mobile device before entering the non-working state, and the initial visual image being an image captured by the self-mobile device after switching to the working state; and
when a similarity between the target image and the initial visual image is greater than or equal to a preset similarity, determining that the surrounding environment of the self-mobile device has not changed.

**11.** The method according to claim 8, before comparing the target image with the initial visual image, the method further comprising:

when the self-mobile device is in the working state, acquiring the latest visual images and the latest RTK positioning in real time; and
when the self-mobile device switches from the working state to the non-working state, storing the latest visual images and the latest RTK positioning, such that after the self-mobile device switches from the non-working state to the working state, the latest visual images serve as the target image, and the latest RTK positioning serves as target positioning.

**12.** The method according to any one of claims 1 to 6, wherein

the RTK positioning is in a fixed solution state.

13. The method according to any one of claims 1 to 6, wherein
the non-working state comprises any one of the following states: a pause state, a sleep state, or a power-off state.

14. A detection apparatus for reference station position changes, the apparatus being integrated on a self-mobile device and comprising:

a traveling module, configured to, when a self-mobile device switches from a non-working state to a working state, control the self-mobile device to travel;
an acquisition module, configured to control the self-mobile device to acquire visual images and real-time kinematic (RTK) positioning during a travel of the self-mobile device;
a processing module, configured to perform, according to the visual images and the RTK positioning, repositioning of the self-mobile device; and
a determination module, configured to, when the repositioning of the self-mobile device is successful, determine that a reference station has not been moved, the reference station being configured to provide differential signals to the self-mobile device such that the self-mobile device acquires the RTK positioning according to the differential signals.

15. A detection method for reference station position changes, comprising:

when a self-mobile device switches from a non-working state to a working state, controlling the self-mobile device to acquire environmental images, and determining, according to the environmental images, whether a surrounding environment of the self-mobile device has changed before and after state switch;
when the surrounding environment of the self-mobile device has changed before and after the state switch, controlling the self-mobile device to travel;
controlling the self-mobile device to acquire visual images and real-time kinematic (RTK) positioning during a travel of the self-mobile device;
determining, according to the RTK positioning, a predicted position and a predicted angle of the self-mobile device, and performing, according to the predicted position, the predicted angle, and the visual images, repositioning of the self-mobile device; and
when the repositioning of the self-mobile device is successful, determining that a reference station has not been moved, the reference station being configured to provide differential signals to the self-mobile device such that the self-mobile device acquires the RTK positioning according to the differential signals.

16. The method according to claim 15, wherein determining, according to the RTK positioning, the predicted position and the predicted angle of the self-mobile device, and performing, according to the predicted position, the predicted angle, and the visual images, repositioning of the self-mobile device comprises:

determining, according to current RTK positioning acquired by the self-mobile device, a predicted position of the self-mobile device, the RTK positioning comprising the current RTK positioning, and the visual images comprising current visual images;
determining, according to the current RTK positioning and previous positioning, a predicted angle of the self-mobile device, the previous positioning being RTK positioning acquired by the self-mobile device before acquiring the current RTK positioning and adjacent to the current RTK positioning; and
performing, according to the predicted position, the predicted angle, and the current visual images, repositioning of the self-mobile device.

17. The method according to claim 16, wherein performing, according to the predicted position, the predicted angle, and the current visual images, repositioning of the self-mobile device comprises:

projecting, according to the predicted position and the predicted angle, feature points in an environmental map onto the current visual images to obtain a matched first point count; and
when the first point count is greater than a first threshold, determining that the repositioning of the self-mobile device is successful.

18. The method according to claim 16, further comprising:
when the repositioning of the self-mobile device fails, determining, according to the current visual images and an environmental map, whether the reference station has been moved.

19. The method according to claim 18, further comprising:
when it cannot be determined, according to the current visual images and the environmental map, whether the reference station has been moved, continuing to control the self-mobile device to travel and perform repositioning.

20. The method according to claim 15, further comprising:
when the surrounding environment of the self-mobile device has not changed before and after the state switch, determining, according to the RTK positioning, whether the reference station has been moved.

21. The method according to claim 20, wherein when the surrounding environment of the self-mobile device has not changed before and after the state switch, determining, according to the RTK positioning, whether the reference station has been moved comprises:

when the surrounding environment of the self-mobile device has not changed before and after the state switch, comparing target positioning with initial positioning, the target positioning being RTK positioning acquired by the self-mobile device before entering the non-working state, and the initial positioning being RTK positioning acquired by the self-mobile device after switching to the working state; and
when a distance between the target positioning and the initial positioning is greater than a preset distance, determining that the reference station has been moved.

22. The method according to any one of claims 15 to 21, wherein
the RTK positioning is in a fixed solution state.

23. The method according to any one of claims 15 to 21, wherein
the non-working state comprises any one of the following states: a pause state, a sleep state, or a power-off state.

24. A detection apparatus for reference station position changes, the apparatus being integrated on a self-mobile device and comprising:

a processing module, configured to, when a self-mobile device switches from a non-working state to a working state, control the self-mobile device to acquire environmental images, and determine, according to the environmental images, whether a surrounding environment of the self-mobile device has changed before and after the state switch;
a traveling module, configured to, when the surrounding environment of the self-mobile device has changed before and after the state switch, control the self-mobile device to travel;
an acquisition module, configured to control the self-mobile device to acquire visual images and real-time kinematic (RTK) positioning during a travel of the self-mobile device;
the processing module, further configured to determine, according to the RTK positioning, a predicted position and a predicted angle of the self-mobile device, and perform, according to the predicted position, the predicted angle, and the visual images, repositioning of the self-mobile device; and
a determination module, configured to, when the repositioning of the self-mobile device is successful, determine that a reference station has not been moved, the reference station being configured to provide differential signals to the self-mobile device such that the self-mobile device acquires the RTK positioning according to the differential signals.

25. A self-mobile device, comprising a processor, a memory, and a computer program stored on the memory and executable on the processor, wherein the processor, when executing the computer program, causes an electronic device to implement any one of the methods according to claims 1 to 13 and 15 to 23.

26. A computer-readable storage medium having a computer program stored thereon, wherein the computer program, when executed by a processor, implements any one of the methods according to claims 1 to 13 and 15 to 23.

**FIG. 1**

When a self-mobile device switches from a non-working state to a working state, control the self-mobile device to travel ⟋ 201

Control the self-mobile device to acquire visual images and real-time kinematic (RTK) positioning during the travel of the self-mobile device ⟋ 202

Perform, according to the visual images and the RTK positioning, repositioning of the self-mobile device ⟋ 203

When the repositioning of the self-mobile device is successful, determining that a reference station has not been moved ⟋ 204

**FIG. 2**

301

Determine, by a self-mobile device, a predicted position and a predicted angle

302

Perform, according to the predicted position, the predicted angle, and current visual images, repositioning of the self-mobile device

**FIG. 3**

**FIG. 4**

501

Determine, according to a predicted position and a predicted angle, a pose matrix corresponding to a current pose of a self-mobile device

502

Determine, according to the pose matrix and a transformation matrix, position coordinates of feature points in an environmental map in a camera coordinate system, the transformation matrix being a transformation matrix from a center of the self-mobile device to a camera center

503

Project, according to the position coordinates of the feature points in the environmental map in the camera coordinate system, the feature points in the environmental map onto current visual images to obtain a matched first point count

**FIG. 5**

601

Before a self-mobile device enters a non-working state, save at least one latest RTK positioning and latest visual image, wherein thereafter, when the self-mobile device returns to a working state, the latest RTK positioning becomes target positioning, and the latest visual image becomes a target image

602

Yes ← Determine whether a surrounding environment of the self-mobile device has changed before and after the state switch

No ↓

603

No ← Determine, by the self-mobile device, whether a distance between the target positioning and initial positioning is greater than a preset distance

Yes ↓

604

Determine, by the self-mobile device, that a reference station has been moved, and issue an alert

605

Determine, by the self-mobile device, that the reference station has not been moved

606

Trigger the self-mobile device to perform repositioning

607

Acquire, by the self-mobile device during forward travel, a current visual image and current RTK positioning

608

Determine, by the self-mobile device according to the current visual image and the current RTK positioning, a predicted position and a predicted angle

609

Project, by the self-mobile device according to the predicted position and the predicted angle, feature points from an environmental map onto the current visual image, to obtain a matched first point count

610

Determine, by the self-mobile device, whether the first point count is greater than a first threshold → Yes

No ↓

611

Perform, by the self-mobile device, pure visual repositioning on the basis of a BOW dictionary to obtain a second point count

612

No ← Determine, by the self-mobile device, whether the second point count is greater than a second threshold → Yes

**FIG. 6**

Detection apparatus for reference station position changes 700

71

**Traveling module**

72

**Acquisition module**

73

**Processing module**

74

**Determination module**

**FIG. 7**

81

Processor

Self-mobile device 800

84

Communication interface

83

82

Memory

**FIG. 8**

## INTERNATIONAL SEARCH REPORT

| International application No. |
| --- |
| **PCT/CN2024/103137** |

**A. CLASSIFICATION OF SUBJECT MATTER**

G01S19/41(2010.01)i; G01S19/45(2010.01)i; A01D34/00(2006.01)i

According to International Patent Classification (IPC) or to both national classification and IPC

**B. FIELDS SEARCHED**

Minimum documentation searched (classification system followed by classification symbols)

IPC: G01S19/-; A01D34/-

Documentation searched other than minimum documentation to the extent that such documents are included in the fields searched

Electronic data base consulted during the international search (name of data base and, where practicable, search terms used)

CNTXT; CNABS; CNKI; WPABS; DWPI; ENTXT: 科沃斯, 张陶晶, 蒋代红, 付雷, 王文, 茹毅超, 基站, 基准站, 位置, 变化, 变动, 移动, 挪动, 检测, 监测, 识别, 视觉, 定位, 投影, 仿射, 变换, 位姿, 矩阵, ECOVACS, base station, position, orientation, change, detect+, vision, visual, transformation, projection, matrix, attitude, angle

**C. DOCUMENTS CONSIDERED TO BE RELEVANT**

| Category* | Citation of document, with indication, where appropriate, of the relevant passages | Relevant to claim No. |
| --- | --- | --- |
| PX | CN 116719067 A (ECOVACS HOUSEHOLD ROBOTICS CO., LTD.) 08 September 2023 (2023-09-08) claims 1-16, and description, paragraphs 0029-0221 | 1-26 |
| A | CN 113359695 A (POSITEC POWER TOOLS (SUZHOU) CO., LTD.) 07 September 2021 (2021-09-07) description, paragraphs 0021-0105 | 1-26 |
| A | CN 116295357 A (SHENZHEN ECOFLOW INNOVATION TECHNOLOGY CO., LTD.) 23 June 2023 (2023-06-23) entire document | 1-26 |
| A | CN 116500658 A (SHENZHEN ECOFLOW INNOVATION TECHNOLOGY CO., LTD.) 28 July 2023 (2023-07-28) entire document | 1-26 |
| A | CN 112684483 A (ZHEJIANG SCI-TECH UNIVERSITY) 20 April 2021 (2021-04-20) entire document | 1-26 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 August 2024** | **27 August 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/103137**

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 107063189 A (SHANGHAI QINRONG INFORMATION TECHNOLOGY CO., LTD.) 18 August 2017 (2017-08-18) <br> entire document | 1-26 |
| A | JP 2000041173 A (MR SYSTEM KENKYUSHO K.K.) 08 February 2000 (2000-02-08) <br> entire document | 1-26 |
| A | CN 108917761 A (XI'AN JIAOTONG UNIVERSITY) 30 November 2018 (2018-11-30) <br> entire document | 1-26 |

Form PCT/ISA/210 (second sheet) (July 2022)

## INTERNATIONAL SEARCH REPORT
### Information on patent family members

| International application No. |
| --- |
| **PCT/CN2024/103137** |

| Patent document cited in search report | | | Publication date (day/month/year) | Patent family member(s) | | | Publication date (day/month/year) |
| --- | --- | --- | --- | --- | --- | --- | --- |
| CN | 116719067 | A | 08 September 2023 | None | | | |
| CN | 113359695 | A | 07 September 2021 | WO | 2021175315 | A1 | 10 September 2021 |
| CN | 116295357 | A | 23 June 2023 | None | | | |
| CN | 116500658 | A | 28 July 2023 | None | | | |
| CN | 112684483 | A | 20 April 2021 | None | | | |
| CN | 107063189 | A | 18 August 2017 | None | | | |
| JP | 2000041173 | A | 08 February 2000 | None | | | |
| CN | 108917761 | A | 30 November 2018 | None | | | |

Form PCT/ISA/210 (patent family annex) (July 2022)